# EUROPÄISCHE PATENTANMELDUNG

(11) **EP 3 460 970 A1**
(43) Veröffentlichungstag der Anmeldung: **27.03.2019**
(21) Anmeldenummer: 18196391.9
(22) Anmeldetag: 24.09.2018
(51) Int. Cl.: H02M 1/12, H02J 3/38, H02M 7/5387, H02J 3/01

(54) **WINDENERGIEANLAGE MIT OBERSCHWINGUNGSARMEN UMRICHTERSYSTEM SOWIE VERFAHREN ZUM BETRIEB**

(30) Priorität: 25.09.2017 DE 102017008936
(71) Anmelder: Senvion GmbH, 22297 Hamburg (DE)
(72) Erfinder: Letas, Heinz-Hermann, 24796 Bovenau (DE)
(74) Vertreter: Glawe, Delfs, Moll

(57) **Zusammenfassung**

Betreiben einer Windenergieanlage (1) umfassend einen Windrotor (12), einen Generator (14) und einen Umrichter (3) mit Stromventilen (36, 36') zur Erzeugung elektrischer Leistung. Es ist eine Umrichtersteuerung (2) vorgesehen, von der die Stromventile (36, 36') mit einer Schaltfrequenz angesteuert werden. Vorgesehen ist ein sprungweises Verändern der Schaltfrequenz zwischen einem ersten und mindestens einem zweiten ganzzahligen Vielfachen der Netzfrequenz. Erfindungsgemäß erfolgt dies so, dass die Schaltfrequenz zyklisch umgeschaltet wird und ein Frequenzabstand zwischen den Schaltfrequenzen mindestens das Doppelte der Netzfrequenz beträgt, und zwar derart, dass keine der Schaltfrequenzen ein ganzzahliges Vielfaches einer anderen der Schaltfrequenzen ist. Auf diese Weise können Oberschwingungen gezielt verringert werden, wobei dank der Ganzzahligkeit zur Netzfrequenz keine Zwischenfrequenzen entstehen. Besonders günstig sind ungerade ganzzahlige Vielfache. Aufwendige Filter zur Oberschwingungsreduzierung können entfallen. Die Erfindung bezieht sich ferner auf eine entsprechende Windenergieanlage (1).

## Beschreibung

Die Erfindung betrifft eine Windenergieanlage sowie ein Verfahren zum Betreiben einer Windenergieanlage mit einem Generator sowie einem Umrichter zur Erzeugung elektrischer Leistung und Abgabe mit einer Netzfrequenz. Der Umrichter umfasst Stromventile, welche mit einer Schaltfrequenz angesteuert werden.

Um einen drehzahlvariablen Betrieb zu ermöglichen, sind moderne Windenergieanlagen mit Umrichtern versehen. Hierbei besteht der Umrichter typischerweise aus zwei Wechselrichtern mit einem Spannungszwischenkreis, wobei einer der Wechselrichter generatorseitig und der andere netzseitig angeordnet ist. Wechselrichter mit durch Modulation erzeugten, rechteckförmigen Spannungspulsen mit variabler Pulsbreite. Diese gepulste Spannung erzeugt neben der gewünschten Grundschwingung der Spannung (Netzfrequenz) auch Spannungsoberschwingungen am Ausgang des Wechselrichters. Diese stören das Netz und sind daher unerwünscht. Zur Dämpfung der Spannungsoberschwingungen sind daher typischerweise an den Netzanschlussseite Filter vorgesehen, die meist als L-C-Filter oder L-C-L-Filter ausgeführt sind. Diese verringern die Spannungsoberschwingungen breitbandig. Eine gezielte Reduktion besonders störender Oberschwingungen erfordert speziell optimierte zusätzliche Filter. Diese sind nicht nur ausgesprochen teuer, sondern auch aufwendig in der Konfiguration. Die somit nicht vollständig eliminierten Spannungsoberschwingungen werden durch die im Netz vorhandene Impedanz (insbesondere Transformatorimpedanz sowie Netzimpedanz) zu Oberschwingungsströmen im Netz. Diese belasten das Netz sind deshalb unerwünscht. Zur Sicherung der Stabilität des Netzes bestehen hier vorbestimmte Grenzwerte. Deren Erfüllung insbesondere bei sogenannten weichen Netzen ist recht anspruchsvoll.

Der an sich bekannte Reduktion von Oberschwingungen durch zusätzliche L-C-L-Filter ist für einen generellen Einsatz zu aufwendig und im Übrigen auch nicht spezifisch genug, um besonders störende Oberschwingungen zu eliminieren.

Für Umrichter von Windenergieanlagen ist es bekannt, die Schaltfrequenz stufig zu verstellen, wobei die verwendeten Schaltfrequenzen ganzzahlige Vielfache voneinander sind. Liegt beispielsweise die Basis-Schaltfrequenz an sich bei 2.25 kHz, so kann auf 4.5 kHz, 6.75 kHz, 9 kHz etc. umgeschaltet werden. Da die höheren Schaltfrequenzen ganzzahlige Vielfache der Basis-Schaltfrequenz sind, belasten sie das Oberschwingungsspektrum der Basis-Schaltfrequenz. Ferner kann die Vervielfachung der Schaltfrequenz eine beträchtliche Steigerung der Umschaltverluste verursachen.

Aus einem anderen Zusammenhang mit der Verwendung von Solarmodulen ist es bekannt (DE 10 2014 119 502 B3), mehrere Umrichter parallel zu schalten. Hierbei müssen die für die Pulsweitenmodulation der Umrichter verwendeten Hilfssignale synchronisiert werden. Zusätzlich ist vorgesehen, diese Pulsweitenmodulation-Signale zu wobbeln, um so die elektromagnetische Abstrahlung auf ein breiteres Spektrum zu verteilen.

Der Erfindung liegt die Aufgabe zugrunde, eine Windenergieanlage sowie ein Verfahren zu deren Betrieb bereitzustellen, mit der störende Oberschwingungen gezielter reduziert werden können.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einem Verfahren zum Betreiben einer Windenergieanlage mit einem von einem Windrotor angetriebenen Generator, der mit einem Umrichter zusammenwirkt zur Erzeugung elektrischer Leistung, welche mit Netzfrequenz über eine Anschlussleitung abgegeben wird, wobei der Umrichter zumindest einen netzseitigen Wechselrichter mit Stromventilen umfasst, und eine Umrichtersteuerung vorgesehen ist zur Ansteuerung des Umrichters, wobei die Stromventile von einem Steuersignal mit einer Schaltfrequenz angesteuert werden, vorgesehen ein sprungweises Verändern der Schaltfrequenz zwischen einem ersten und mindestens einem zweiten ganzzahligen Vielfachen der Netzfrequenz, wobei die Schaltfrequenz zyklisch umgeschaltet wird und ein Frequenzabstand zwischen den Schaltfrequenzen mindestens das Doppelte der Netzfrequenz beträgt, und keine der Schaltfrequenzen ein ganzzahliges Vielfaches einer anderen der Schaltfrequenzen ist.

Zuerst dann einige verwendete Begriffe erläutert:
Unter einer Schaltfrequenz wird die Frequenz des Steuersignals verstanden, mit dem die Stromventile eines Wechselrichters angesteuert werden.

Unter einer Periodizität wird die Periodendauer eines Zyklus verstanden.

Unter einer Netzfrequenz wird die Frequenz verstanden, mit welcher die Windenergieanlage die elektrische Leistung in das Netz abgibt.

Unter einer Tastzeit wird innerhalb eines Zyklus die Zeitdauer verstanden, während der ein bestimmter Schaltzustand herrscht. Die Tastzeit entspricht dem Verhältnis aus Tastverhältnis und Periodendauer des Zyklus.

Die Erfindung beruht auf dem Gedanken, dass abhängig von der Wahl der Schaltfrequenz unterschiedliche Oberschwingungen erzeugt werden können. Die Erfindung hat erkannt, dass durch das zyklische Umschalten die Oberschwingungen gezielt gesteuert werden können. So können die zu einer Schaltfrequenz gehörenden Oberschwingungen dadurch verringert werden, dass innerhalb eines Zyklus diese Schaltfrequenz weniger häufig eingestellt wird. Hierbei sind erfindungsgemäß die Schaltfrequenzen stets ganzzahlige Vielfache der Grundfrequenz (Netzfrequenz). Dabei ist aber keine der Schaltfrequenzen ein ganzzahliges Vielfaches einer der anderen Schaltfrequenzen. Denn dann würde sich das Oberschwingungsspektrum größtenteils überlappen, was im Sinne der vorliegenden Erfindung kontraproduktiv wäre.

Störende Oberschwingungen können auf diese Weise gezielt verringert werden in dem die Umrichter öfter (d.h. mit größeren Zeitanteilen) mit einer anderen Schaltfrequenz betrieben werden, wobei die andere Schaltfrequenz ebenfalls ein ganzzahliges Vielfaches ist und sich mindestens um das Doppelte der Grundfrequenz unterscheidet. Die Erfindung hat erkannt, dass durch diese Bedingungen dank der Ganzzahligkeit keine Zwischenfrequenzen entstehen. Das ist ausgesprochen wichtig, da Zwischenfrequenzen das beträchtliche Risiko der Störung von Rundsteueranlagen im Netz mit sich bringen. Die Wahl der doppelten Grundfrequenz als Minimum bei der Frequenzänderung bietet den Vorteil, dass die Art der Ganzzahligkeit erhalten bleibt: ist die erste Schaltfrequenz ein ungeradzahliges Vielfaches, so ist es dann die zweite Schaltfrequenz auch. Das Umschalten der Schaltfrequenz ist dann weniger störanfällig als es beim Umschalten auf geradzahlige Vielfache wäre.

Insgesamt ermöglicht es die Erfindung somit, gezielt Oberschwingungen zu reduzieren, ohne dass dazu aufwändige und speziell optimierte Filter benötigt werden. Die Erfindung selbst benötigt nur einen geringen oder keinen Zusatzaufwand bezüglich Hardware, da die erforderliche Veränderung der Schaltfrequenz meist mit vorhandenen Mitteln leicht durchgeführt werden kann. Zusätzliche Schaltverluste entstehen nicht, jedenfalls nicht, wenn der gewichtete Mittelwert der Schaltfrequenzen so bleibt wie vorher (d. h. wie ohne die Erfindung). Ferner bietet die Erfindung den Vorteil einfacher Anpassbarkeit, da eine Anpassung keine Hardware-Änderungen erforderlich macht. Dies bezieht sich insbesondere auch auf die Anpassung der Windenergieanlagen für einen Betrieb am 50 Hz oder 60 Hz Netz; gerade dies war mit konventionellen Filtern bisher nur mit aufwendigen Anpassungen und Änderungen zu realisieren.

An den Umrichter stellt die Erfindung keine besonderen Anforderungen. Es können einfache "2-level"-Versionen verwendet werden wie auch aufwendigere "Multi-level"-Versionen. Bei der Erfindung geht es im Wesentlichen um den netzseitigen Wechselrichter. Durch die Veränderung der Schaltfrequenz von dessen Stromventilen werden die erfindungsgemäßen Wirkungen erreicht. Die übrigen Elemente des Umrichters (wie generatorseitiger Wechselrichter/Gleichrichter oder Zwischenkreis) können unverändert bleiben.

Es hat sich für die Erfindung besonders bewährt, ausschließlich ungeradzahlige ganzzahlige Vielfache der der Grundfrequenz für die Schaltfrequenz zu verwenden. Damit kann eine wirksame Reduktion besonders störender Oberschwingungen erreicht werden.

Mit Vorteil ist die Periodendauer eines Zyklus kleiner als 200 ms. Das bedeutet, dass das Umschalten der Schaltfrequenz häufiger als fünfmal je Sekunde passierte, also mit mehr als 5 Hz. Da die technisch verwendeten Schaltfrequenzen meist im Bereich akustisch hörbarer Frequenzen liegen, hat sich gezeigt, dass für die Umgebung störende Schalleindrücke (zum Beispiel Vibrato) dann vermieden werden können, wenn das Umschalten schnell genug geschieht. Schnell genug heißt hierbei, dass die Periodendauer eines Zyklus kürzer als 200 ms, vorzugsweise maximal 160 ms, ist. Dann werden die verschiedenen Schaltfrequenzen in der Umgebung akustisch nicht mehr als einzelne Frequenzen wahrgenommen, sondern verschmelzen zu einem Gesamteindruck.

Im Grundsatz genügt für die Ausführung der Erfindung die Verwendung von zwei verschiedenen Schaltfrequenzen. Jedoch kann eine gezieltere und umfangreichere Beeinflussung der Oberschwingungen erfolgen, wenn eine dritte Schaltfrequenz bzw. oder sogar noch weitere Schaltfrequenzen hinzugenommen werden. Damit kann eine besonders feine Anpassung des Oberschwingung-Spektrums erfolgen. Die dritten bzw. weiteren Schaltfrequenzen sind vorzugsweise ebenfalls (ungeradzahlige) ganzzahlige Vielfache der Schaltfrequenz.

Das Umschalten der Schaltfrequenzen kann gleichmäßig in dem Sinne erfolgen, dass jede Schaltfrequenz während eines Zyklus gleich lang wie die andere eingestellt ist. Technisch gesehen bedeutet dies, dass das Tastverhältnis der Schaltfrequenzen gleich ist. Dies bedeutet, dass beispielsweise bei zwei verschiedenen Schaltfrequenzen jede der beiden Schaltfrequenzen für 50 % der Zykluszeit eingestellt wird; und bei drei Schaltfrequenzen wird jede der drei Schaltfrequenzen für 33,3 % der Zykluszeit eingestellt. Das ist aber nicht zwingend. Es kann auch vorgesehen sein, dass die Schaltfrequenzen verschieden lang eingestellt werden. Hierüber kann die Stärke der Reduktion der jeweiligen Oberschwingungen wahlfrei gesteuert werden. Es gilt, dass je kürzer der relative zeitliche Anteil für eine Schaltfrequenz ist, umso stärker reduziert sich der Messwert der jeweiligen Oberschwingung. Somit kann erfindungsgemäß durch Wahl der zeitlichen Verteilung ein gezieltes Umverteilen von Oberschwingungsamplituden erfolgen. Es hat sich bewährt, hierbei die Tastzeiten nicht stufenlos zu variieren, sondern innerhalb eines Rasters.

Zweckmäßigerweise erfolgt das Umschalten der Schaltfrequenz phasensynchron. Zweckmäßigerweise erfolgt dies so, dass eine Schaltfrequenz immer für mehrere Perioden eingestellt bleibt. Auf diese Weise wird das Auftreten störender phasenabhängiger Effekte sicher vermieden. Mit Vorteil geschieht das Umschalten jeweils am betragsmäßigen Maximum des Trägersignals. Das ist ein verhältnismäßig einfach zu detektierendes Ereignis und sichert damit auf zweckmäßige Weise die gewünschte Synchronisation.

Mit Vorteil ist mindestens ein zweiter Umrichter vorgesehen, der parallel angeordnet ist. Er wird genauso mit zyklisch umgeschalteten Schaltfrequenzen angesteuert wie vorstehend beschrieben, also mit derselben Schaltfrequenz aber mit einer versetzten Phase. Bei insgesamt zwei Umrichtern beträgt der Phasenversatz vorzugsweise 180°, bei einer größeren Anzahl von n Umrichtern entsprechend 360°geteilt durch die Anzahl n. Damit wird eine noch bessere Auslöschung bei den Oberschwingungen erreicht. Hierbei ist der zweite (und ggf. die weiteren) Umrichter über eigene Leitungen mit dem Generator verbunden, so dass die Umrichter isoliert voneinander sind. Eine Zusammenführung erfolgt erst netzseitig, vorzugsweise über einen Dreiwicklungstransformator (mit jeweils geerdeten Sternpunkten).
Die Erfindung erstreckt sich auch auf eine für den entsprechenden Betrieb ausgebildete Windenergieanlage mit einer entsprechenden Umschalteinrichtung für die Schaltfrequenz des Steuersignals. Zur näheren Erläuterung wird auf vorstehende Beschreibung verwiesen.

Die Erfindung wird nachfolgend unter Bezugnahme auf die beigefügte Zeichnung näher anhand eines Ausführungsbeispiels erläutert. Es zeigen:
- Fig. 1: eine schematische Ansicht einer Windenergieanlage mit einem Umrichter gemäß einem Ausführungsbeispiel der Erfindung;
- Fig. 2: ein Teil-Schaltbild des Umrichters mit seiner Ansteuerung;
- Fig. 3: Diagramme zu Signalen der Pulsweitenmodulation;
- Fig. 4: Diagramme zur Ansteuerung des Umrichters mit Umschalten zwischen Schaltfrequenzen;
- Fig. 5a - c: verschiedene Zeitverläufe zum Umschalten der Schaltfrequenz bei zwei Schaltfrequenzen;
- Fig. 6a - c: verschiedene Zeitverläufe zum Umschalten der Schaltfrequenz bei drei Schaltfrequenzen;
- Fig. 7: ein Blockschaltbild für eine Umschalteinrichtung der Schaltfrequenz;
- Fig. 8: ein Oberschwingungsspektrum für drei Schaltfrequenzen;
- Fig. 9: Oberschwingungsspektren für zwei bzw. vier Schaltfrequenzen; und
- Fig. 10: ein alternatives Ausführungsbeispiel mit zwei parallel angeordneten Umrichtern.

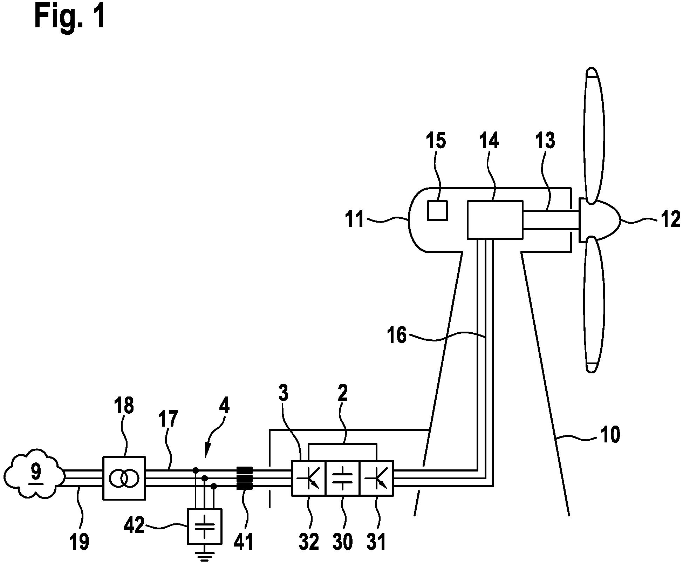

Zur Erläuterung eines Ausführungsbeispiels der Erfindung wird zuerst Bezug genommen auf Fig. 1. Sie zeigt eine in ihrer Gesamtheit mit der Bezugsziffer 1 bezeichnete Windenergieanlage gemäß einem Ausführungsbeispiel der Erfindung, das zur Ausführung des Verfahrens gemäß der Findung geeignet ist.

Die Windenergieanlage 1 umfasst einen Turm 10, auf dessen oberem Ende eine Gondel 11 in Azimutrichtung schwenkbar angeordnet ist. An einer Stirnseite der Gondel 11 ist ein Windrotor 12 drehbar angeordnet. Er umfasst einen Nabe mit einem oder mit mehreren Rotorblättern und treibt über eine Rotorwelle 13 einen in der Gondel 11 angeordneten Generator 14 an. Dieser wandelt die vom Windrotor 12 aus dem Wind erzeugte mechanische Leistung in elektrische Leistung um. Bei dem Generator 14 kann es sich um einen Synchron- oder Asynchrongenerator handeln, es können aber auch andere Generatorbauarten vorgesehen sein. In der Gondel 11 ist ferner eine Betriebssteuerung 15 angeordnet, welche den Betrieb der Windenergieanlage 1 im gesamten kontrolliert.

Ferner ist ein Umrichter 3 vorgesehen, der bei dem dargestellten Ausführungsbeispiel am Fuß des Turms 10 der Windenergieanlage 1 angeordnet ist. Er ist über eine Verbindungsleitung 16, die durch den gesamten Turm 10 verläuft, mit dem Generator 14 verbunden. Der Umrichter 3 umfasst einen Gleichrichter oder generatorseitigen Wechselrichter 31, einen netzseitigen Wechselrichter 32 sowie einen dazwischen angeordneten Gleichspannungszwischenkreis 30. Der Umrichter 3 gibt elektrische Leistung über eine Leitung 17 an einen Anlagentransformator 18 ab. Dieser wiederum ist über eine Anschlussleitung 19 an ein Netz 9 angeschlossen und gibt elektrische Leistung an das Netz 9 ab.

In der Leitung 17 ist ein L-C-L-Filter 4 zur Verringerung der von dem netzseitigen Wechselrichter 32 erzeugten Oberschwingungen vorgesehen. Das L-C-L-Filter 4 ist gebildet aus einer Netzfilterdrossel 41 am Ausgang des netzseitigen Wechselrichters 32, einem netzseitig der Netzfilterdrossel 41 angeordneten und auf Masse geschalteten Kondensator 42 sowie einer zweiten in Reihe geschalteten Induktivität. Letztere ist aus Aufwandsgründen nicht als ein gesondertes Bauelement ausgeführt, sondern die windenergieanlagenseitige Wicklung des Anlagentransformators 18 fungiert als zweite Induktivität des L-C-L-Filters 4.

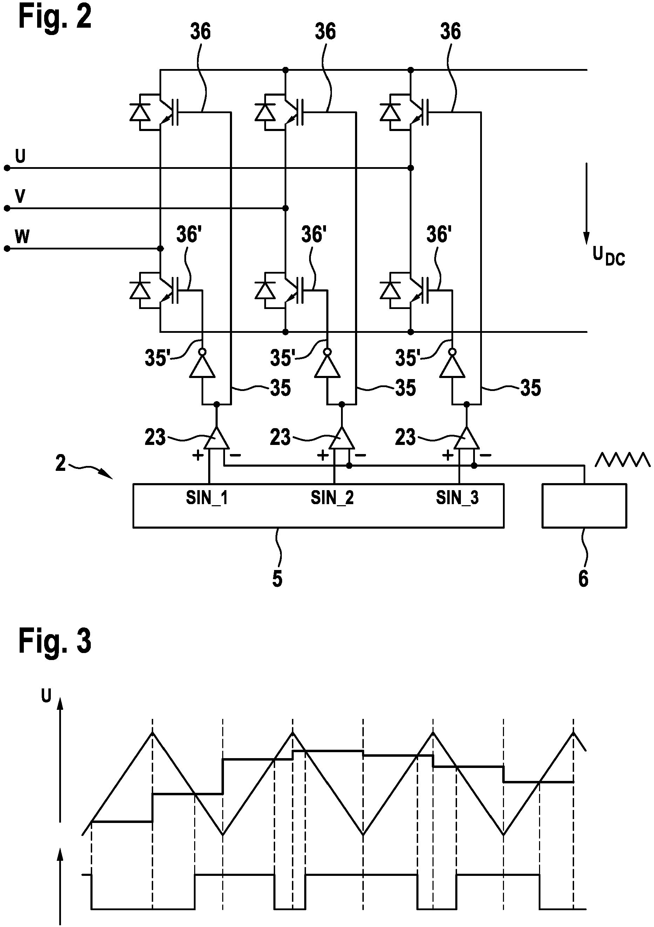

Der funktionelle Aufbau des netzseitigen Wechselrichters 32 ist in Fig. 2 näher dargestellt. Er weist drei parallele Phasenstränge auf, die jeweils zwei in Reihe geschaltete Stromventile 36, 36' umfassen. An dem gemeinsamen Verknüpfungspunkt von je zwei in Reihe geschalteten Stromventilen 36, 36' ist jeweils eine der Phasen der Leitung 17 angeschlossen. Dies gilt für einen Zwei-Level-Umrichter, der aus Vereinfachungsgründen in Fig. 2 dargestellt ist. Die Erfindung ist darauf jedoch nicht beschränkt. Die Umrichter 3 bzw. der netzseitige Wechselrichter 32 können auch (in an sich bekannter Weise) mit mehr als zwei Level ausgeführt sein (sog. Multi-Level-Umrichter).

Die Stromventile 36, 36' sind über Signalleitungen 35, 35' angesteuert von einer Umrichtersteuerung 2. Die Umrichtersteuerung 2 umfasst zur Erzeugung von Steuersignalen einen Pulsweitenmodulator mit einem Regler 5, der die von dem Wechselrichter 32 abzugebende Sinusschwingung kontrolliert, sowie einem Trägersignalgenerator 6. Der Regler 5 erzeugt für die drei Phasen jeweils eine sinusförmige Schaltfrequenz (SIN_1, SIN_2, SIN_3), die um jeweils 120°phasenversetzt zueinander sind. Frequenz und Amplitude sind abhängig von einem von der Betriebssteuerung 15 für den Wechselrichter 32 erzeugten Steuersignal. Zur einfachen digitalen Weiterverarbeitung werden die so erzeugten frequenzgleichen, aber phasenversetzten Signale jeweils einem Abtasthalteglied (nicht dargestellt) zugeführt, und die dann durch die Abtastung gewonnen Signale aus dem Regler 5 ausgegeben. Sie sind jeweils angelegt an einen positiven Eingang eines Komparators 23. An einen negativen Eingang eines jeden Komparators 23 ist das Trägersignal angeschlossen, welches von dem Trägersignalgenerator 6 bereitgestellt wird. Der Ausgang des Komparators 23 ist über die Signalleitung 35 an jeweils eines der oberen Stromventile 36 angeschlossen, und ferner ist der Ausgang über jeweils einen zwischengeschalteten Inverter 24 und die Signalleitung 35' an jeweils eines der unteren Stromventile 36' angeschlossen. Somit werden die unteren Stromventile 36' komplementär zu den oberen Stromventilen 36 angesteuert. Die vorstehende Erläuterung erfolgt exemplarisch an einem Umrichter mit Pulsweitenmodulation, der nach dem Unterschwingungsverfahren betrieben ist; die Erfindung ist aber nicht auf diese Bauart beschränkt, sondern kann auch bei anderen Umrichterbauarten vorgesehen sein.

Insgesamt fungiert hierbei der Komparators 23 als Modulationsstufe, die das von dem Trägersignalgenerator 6 erzeugte Trägersignal entsprechend dem von dem Regler 5 abgetasteten Sinussignal moduliert. Somit werden je nach aktueller Amplitude des Sinussignals die jeweiligen Stromventile 36, 36' kürzer oder länger angesteuert, und zwar mit der Frequenz des Trägersignals. Dies ist das Grundprinzip der Pulsweiten-Modulation, wie es in Fig. 3 visualisiert ist. Oben in dem Diagramm sind die Eingangssignale der Modulationsstufe (Komparators 23) dargestellt. Zum einen ist dies das dreiecksförmige Trägersignal, und zum anderen ist dies die abgetastete (und somit blockartig an- bzw. absteigende) Steuerspannung des Reglers 5, die etwa einer Halbwelle eines Sinussignals entspricht. Die Abtastung ist hierbei so mit dem Trägersignal synchronisiert, dass immer bei einem Extremwert des Trägersignals (Maximum oder Minimum) eine neue Abtastung erfolgt. Dass sich am Ausgang der Modulationsstufe ergebende Signal ist somit pulsweitenmoduliert (PWM-Signal) und unten in Fig. 3 dargestellt. Man erkennt, dass je höher die Steuerspannung ist, desto größer das Tastverhältnis des Ausgangssignals.

Üblicherweise liegt die Frequenz des Trägersignals im hörbaren Spektrum von einigen Kilohertz. Das hat zur Folge, dass der Wechselrichter durch akustische Effekte von Magnetostriktion in den Bauteilen einen charakteristischen Pfeifton abgibt. Die Tonhöhe des Pfeiftons ist hierbei durch die Frequenz des Trägersignals bestimmt und die Lautstärke durch das Tastverhältnis.

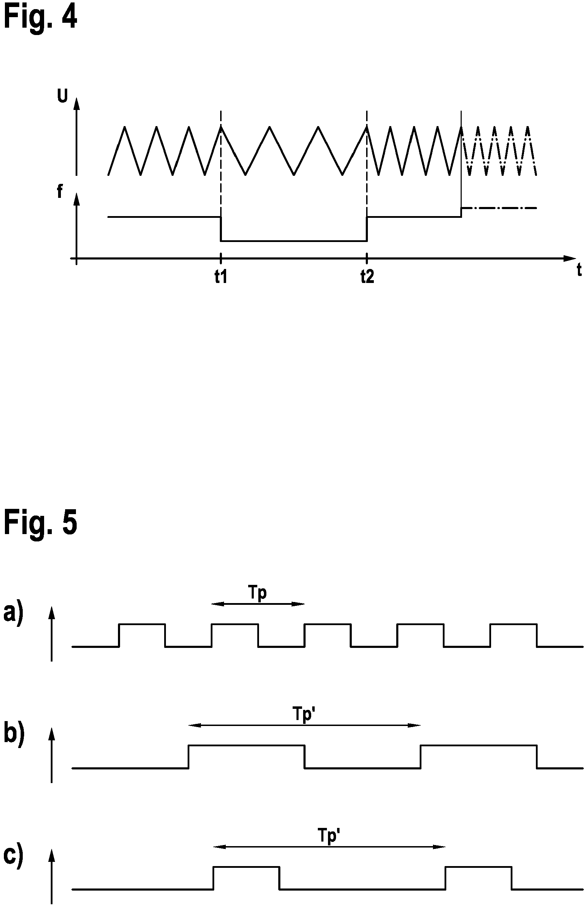

Erfindungsgemäß ist vorgesehen, dass die Frequenz des Trägersignals nicht konstant bleibt, sondern umgeschaltet wird zwischen zwei Werten, die beide ungerade ganzzahlige Vielfache der Grundfrequenz (Netzfrequenz) sind. Als Beispiel seien das 39. sowie 41. Vielfache angenommen, woraus sich bei einer Netzfrequenz von 50 Hz Schaltfrequenzen des Trägersignals von 1950 Hz bzw. 2050 Hz ergeben. Wichtig sind hierbei zwei Aspekte: zum einen soll jede der Schaltfrequenzen ein ganzzahliges Vielfaches sein, vorzugsweise ein ungeradzahliges, und zum anderen soll der Abstand der Schaltfrequenzen, zwischen denen umgeschaltet wird, mindestens das Doppelte der Netzfrequenz betragen. Dies ist in Fig. 4 visualisiert.

In Fig. 4 ist der zeitliche Verlauf der Schaltfrequenz des Trägersignals dargestellt, und zwar oben in Amplitudendarstellung und unten in Frequenzdarstellung. Zuerst (in Fig. 4 links) wird eine erste Schaltfrequenz ausgegeben. Es erfolgt zum Zeitpunkt t1 ein Umschalten auf eine zweite tiefere Schaltfrequenz. Das Umschalten erfolgt synchronisiert mit einem Maximum der dreiecksförmige Schaltfrequenz, so sich ein nahtloser Anschluss ergibt. Zum Zeitpunkt t2 wird wieder auf die erste Schaltfrequenz zurückgeschaltet. Optional kann -je nach Ausführungsform - ein Umschalten auf eine dritte Schaltfrequenz vorgesehen sein, wie es ganz rechts mit strichpunktierter Linie in Fig. 4 dargestellt ist. Die dritte Schaltfrequenz ist höher als die erste Schaltfrequenz. Das Umschalten erfolgt stets synchronisiert, nämlich im Maximum der dreiecksförmige Schaltfrequenz.

Beispiele für die zeitliche Verteilung von zwei verschiedenen Schaltfrequenzen sind in Figuren 5a bis c dargestellt. Es wird dieselbe Frequenzdarstellung verwendet, wie sie in dem unteren Bereich von Fig. 4 verwendet ist. In Fig. 5a sind die beiden Schaltfrequenzen symmetrisch verteilt, d.h. beide werden für jeweils 50 % der Zeit angewählt. Hierbei folgt das Umschalten verhältnismäßig rasch, das bedeutet es ist die kürzeste Periodendauer (Tp) für das Umschalten eingestellt. Alternativ hierzu ist in Fig. 5b ein Verlauf dargestellt, bei dem ebenfalls die beiden Schaltfrequenzen symmetrisch verteilt sind, jedoch eine deutlich längere Periodendauer (Tp') für das Umschalten eingestellt ist. Tatsächlich ist dargestellt die im Rahmen der Erfindung vor längstmöglich vorgesehene Periodendauer, nämlich 160 ms. Damit ergibt sich eine Umschaltfrequenz von gut 6 Hz. Die Erfindung hat erkannt, dass eine Umschaltfrequenz von mindestens 6 Hz den Vorteil hat, dass ein gleichmäßiger akustischer Eindruck entsteht, und so ein für die Umgebung unangenehmes "Vibrato" vermieden werden kann, wie es bei niederfrequenterem Umschalten aufträte. In Fig. 5c ist ebenfalls ein Wechseln zwischen zwei Schaltfrequenzen mit längstmöglicher Periodendauer (Tp') dargestellt, jedoch mit dem Unterschied, dass eine asymmetrische Verteilung zwischen den beiden Schaltfrequenzen besteht: die höhere Schaltfrequenz wird deutlich seltener eingestellt als die tiefere.

Dieses Verändern der Verteilung wird auch als Einstellen des Tastverhältnisses bezeichnet. Es kann damit erfindungsgemäß die Stärke des Auftretens derjenigen Oberschwingungen beeinflusst werden, die mit der jeweiligen Schaltfrequenz verknüpft sind. So sind im Fall von Fig. 5c die mit dem Auftreten der höheren Schaltfrequenz einhergehenden Oberschwingungen reduziert, während im Fall der Fig. 5b die mit dem Auftreten der tieferen Schaltfrequenz auftretenden Oberschwingungen reduziert sind. Damit kann durch Verändern des Tastverhältnisses ein "Designen" der Oberschwingungsabgabe erfolgen. Sind beispielsweise die durch die höhere Schaltfrequenz hervorgerufenen Oberschwingungen kritisch und führen zu einer Verletzung von Netzanschlusskriterien, so kann durch ein Übergehen auf die asymmetrische Verteilung gemäß Fig. 5c mit dem anderen Tastverhältnis der Anteil der höheren Schaltfrequenz reduziert werden, wodurch sich auch entsprechend die damit verknüpften Oberschwingungen reduzieren. Das Einhalten der geforderten Grenzwerte wird damit deutlich vereinfacht.

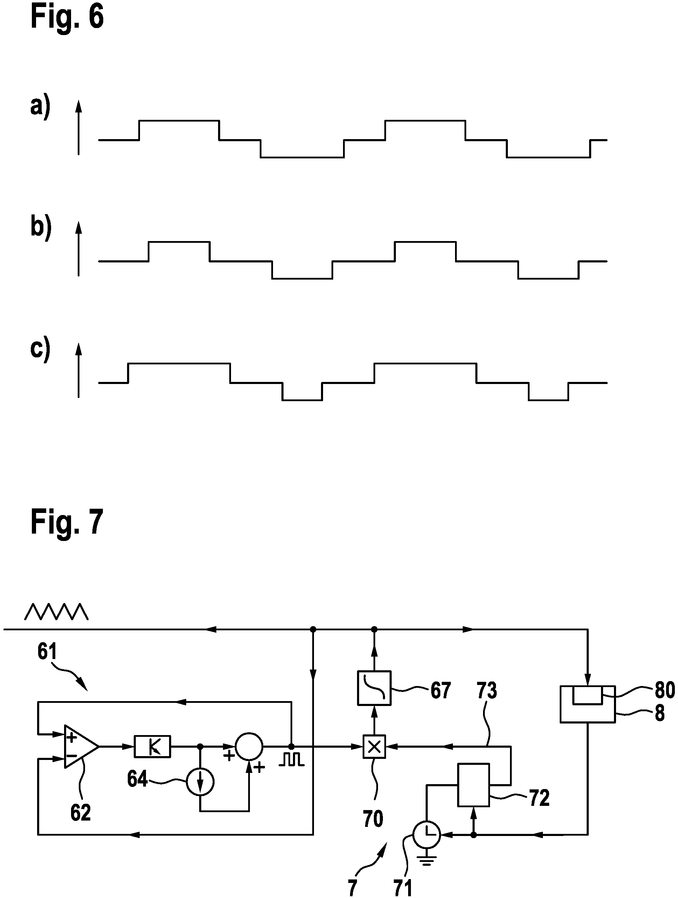

Beispiele für die zeitliche Verteilung von drei verschiedenen Schaltfrequenzen sind in Figuren 6a bis c dargestellt. Es wird dieselbe Darstellung verwendet wie in Fig. 5. So ist in Fig. 6a eine symmetrische Verteilung dargestellt, bei der jede Schaltfrequenz für ein Drittel der Zeit eingestellt ist. In Fig. 6b ist eine Variante dargestellt, bei der sich die Dauer für die einzelnen Schaltfrequenzen unterscheiden. Hierbei wird die mittlere Frequenz doppelt so lange verwendet wie die niedrige bzw. hohe Frequenz. Eine asymmetrische Verteilung ist in Fig. 6c dargestellt. Hierbei sind die hohe und mittlere Schaltfrequenz für je 40% der Zeit und die niedrige für 20% der Zeit eingestellt.

Ein Blockschaltbild für einen erfindungsgemäß ausgebildeten Trägersignalgenerator 6 zum Umschalten der Schaltfrequenz ist in Fig. 7 dargestellt. Er umfasst eine Kippstufe 61 zur Bildung eines Rechtecksignals, die in an sich bekannter Weise aus einem mitgekoppelten Operationsverstärker 62 und einer Spannungsreferenz 64 ausgebildet ist. Ferner umfasst der Trägersignalgenerator 6 eine auf die Kippstufe 25 folgende Integratorstufe 67 zur Bildung eines Dreiecksignals. Der Ausgang der Kippstufe 61 ist jedoch nicht direkt auf den Eingang der Integratorstufe 67 gelegt, sondern über ein zwischengeschaltetes Multiplikationsglied 70 geführt. Es ist Teil einer Umschalteinrichtung 7.

Die Umschalteinrichtung 7 umfasst eine Wertfolgetabelle 72, in welcher Werte für die einzustellende Schaltfrequenz in zeitlicher Abfolge eingespeichert sind. Sind beispielsweise drei verschiedene Schaltfrequenzen einzustellen, so enthält die Wertfolgetabelle 72 Werte für diese drei Schaltfrequenzen, und zwar in der Reihenfolge, in der sie verwendet werden sollen; diese kann durchaus variieren, zum Beispiel in der Folge niedrig-mittel-hoch und anschließend die umgekehrte Reihenfolge hoch-mittel-niedrig. Andere Variationen sind möglich und dank der gewählten Implementation mit der Wertfolgetabelle 72 problemlos verwendbar. Auch die Zeitdauer, über welche eine Schaltfrequenz eingestellt bei bevor auf eine andere umgeschaltet wird, ist in der Wertfolgetabelle 72 abgelegt. Für andere Anzahlen von Schaltfrequenzen, beispielsweise zwei oder vier und mehr gilt entsprechendes.

Die Wertfolgetabelle 72 ist verbunden mit einem Zeittaktgeber 71. Dieser bestimmt über die Zeitpunkte, wann neue Werte aus der Wertfolgetabelle 72 abgerufen werden. Die abgerufenen Werte werden als Schaltfrequenz-Steuersignale ausgegeben und über eine Signalleitung 73 an einen zweiten Eingang des Multiplikationsgliedes 70 angelegt. Auf diese Weise wird die Frequenz des von dem Trägersignalgenerator 6 abgegebenen Trägersignals für die Pulsweitenmodulation verändert.

Ferner ist eine Synchronisationseinrichtung 8 vorgesehen. Sie enthält einen Maximumdetektor 80 und wirkt mit dem Zeittaktgeber 71 zusammen. Dies geschieht in der Weise, dass nur beim Erkennen eines Maximums in dem von dem Trägersignalgenerator 6 abgegebenen Dreieckssignal eine Freigabe zum Umschalten erfolgt. Dazu sind entsprechende Freigabesignale über eine Freigabeleitung 81 an den Zeittaktgeber 71 und die Wertfolgetabelle-Einheit 72 angelegt. Auf diese Weise wird erreicht, dass das Umschalten der Schaltfrequenz durch die Umschalteinrichtung 7 nur dann erfolgt, wenn das Dreieckssignal der Schaltfrequenz einen Maximumwert aufweist, also insoweit phasensynchronisiert ist.

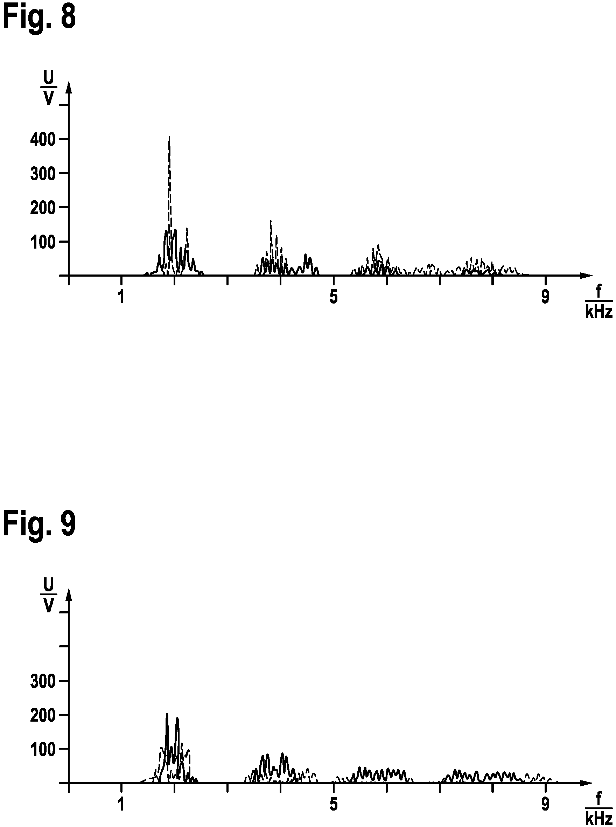

Die Wirkung der erfindungsgemäßen Umschaltung der Schaltfrequenzen auf das Oberschwingungsspektrum ist in Fig. 8 dargestellt, und zwar am Beispiel einer Umschalteinrichtung, die zwischen drei Schaltfrequenzen umschaltet (1850 Hz, 2050 Hz und 2250 Hz, jeweils gleichlang, Periodendauer 120 ms). Im Bereich von 4000, 6000 und 8000 Hz liegen die ersten, zweiten und dritten Oberschwingungen. Man erkennt deutlich, dass sämtliche Oberschwingungen betragsmäßig nur noch sehr schwach auftreten. Zum Vergleich ist das Oberschwingungsspektrum gemäß dem Stand der Technik ohne Umschalteinrichtung mit gestrichelter Linie dargestellt. Der Unterschied ist augenfällig und signifikant. Es kann so erfindungsgemäß die Oberschwingungsbelastung deutlich verringert werden, ohne dass dazu zusätzliche aufwendige Filter erforderlich würden.

Weitere Beispiele für Ausführung mit zwei (durchgezogene Linie) bzw. vier (gestrichelte Linie) verschiedenen Schaltfrequenzen sind in Fig. 9 dargestellt.

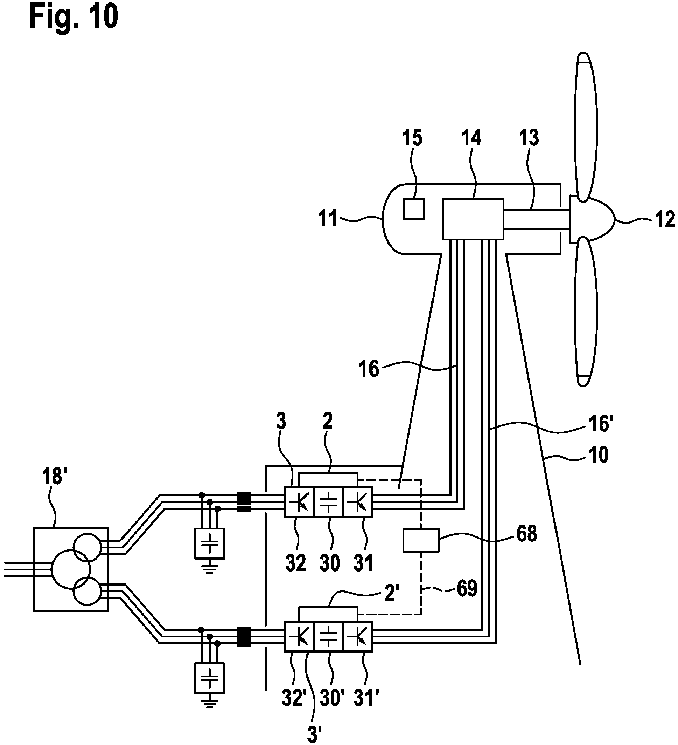

Ein alternatives Ausführungsbeispiel ist in Fig. 10 dargestellt. Es basiert auf dem in Fig. 1 dargestellten Ausführungsbeispiel und gleichartige Komponenten tragen die gleichen Bezugszeichen. Der wesentliche Unterschied liegt darin, dass ein zweiter Umrichter 3' parallel zu dem Umrichter 3 vorgesehen ist, mit einem eigenen Leitungspfad 16' ausgehend von dem Generator 14 über den Umrichter 3' bis hin zu dem Transformator 18', der hierbei als ein Dreiwicklungstransformator ausgeführt ist. Die Sternpunkte der beiden Sekundärwicklungen sind geerdet.

Der Umrichter 3' ist aufgebaut entsprechend wie der Umrichter 3, mit einem generatorseitigen Wechselrichter 31', einem Zwischenkreis 30' und einem netzseitigen Wechselrichter 32'. Die Zwischenkreise 30, 30' sind isoliert voneinander.
Zur Ansteuerung ist eine eigene Umrichtersteuerung 2' vorgesehen, die über eine Koppelleitung 69 mit dem Trägersignalgenerator 6 des Umrichters 3 (s. Fig. 2) verbunden ist. Der zweite Umrichter 3' wird mit der gleichen zyklisch umgeschalteten Schaltfrequenz angesteuert wie der Umrichter 3. Jedoch ist das Trägersignal des zweiten Umrichters phasenversetzt zu dem des Umrichters 3, und zwar um 180°. Dies wird mittels eines Phasenschiebers 68 bewirkt, der in die von dem Ausgang des Trägersignalgenerators zu dem zweiten Umrichter 3' führende Koppelleitung 69 eingeschleift ist.

## Patentansprüche

1. Verfahren zum Betreiben einer Windenergieanlage (1) mit einem von einem Windrotor (12) angetriebenen Generator (14), der mit einem Umrichter (3) zusammenwirkt zur Erzeugung elektrischer Leistung, welche mit Netzfrequenz über eine Anschlussleitung (17) abgegeben wird, wobei der Umrichter (3) zumindest einen netzseitigen Wechselrichter (32) mit Stromventilen (36, 36') umfasst, und eine Umrichtersteuerung (2) vorgesehen ist zur Ansteuerung des Umrichters (3), wobei Stromventile (36, 36')von einem Steuersignal mit einer Schaltfrequenz angesteuert werden,
**gekennzeichnet durch**
sprungweises Verändern der Schaltfrequenz zwischen einem ersten und mindestens einem zweiten ganzzahligen Vielfachen der Netzfrequenz,
wobei die Schaltfrequenz zyklisch umgeschaltet wird und ein Frequenzabstand zwischen den Schaltfrequenzen mindestens das Doppelte der Netzfrequenz beträgt, und keine der Schaltfrequenzen ein ganzzahliges Vielfaches einer anderen der Schaltfrequenzen ist.

2. Verfahren nach Anspruch 1, **dadurch gekennzeichnet, dass** als die ganzzahligen Vielfachen ungerade Vielfache verwendet werden.

3. Verfahren nach Anspruch 1 oder 2, **dadurch gekennzeichnet, dass** das Umschalten innerhalb eines Zyklus mit einer Periodizität von weniger als 200ms erfolgt.

4. Verfahren nach einem der vorangehenden Ansprüche, **dadurch gekennzeichnet, dass** das Umschalten eine dritte und vorzugsweise weitere Schaltfrequenz umfasst, die ebenfalls ganzzahlige Vielfache der Netzfrequenz sind.

5. Verfahren nach Anspruch 4, **dadurch gekennzeichnet, dass** die dritten und weiteren Schaltfrequenzen ungerade ganzzahlige Vielfache.

6. Verfahren nach einem der vorangehenden Ansprüche, **dadurch gekennzeichnet, dass** während eines Zyklus alle Schaltfrequenzen für dieselbe Zeitdauer (Tastzeit) aktiv sind.

7. Verfahren nach einem der vorangehenden Ansprüche, **dadurch gekennzeichnet, dass** während eines Zyklus die Schaltfrequenzen für unterschiedliche Zeitdauern aktiv sind.

8. Verfahren nach einem der vorangehenden Ansprüche, **dadurch gekennzeichnet, dass** mindestens ein zweiter Umrichter (3') vorgesehen ist, der parallel zu dem Umrichter angeordnet ist und mit einem zu dem Steuersignal phasenversetzten zweiten Steuersignal angesteuert wird.

9. Verfahren nach Anspruch 8, **dadurch gekennzeichnet, dass** der Phasenversatz in Grad nach der Beziehung 360°geteilt durch die Anza hl der Umrichter (3, 3') gewählt wird.

10. Verfahren nach Anspruch 8 oder 9, **dadurch gekennzeichnet, dass** die Umrichter (3, 3') über jeweils eigene Leitungen mit dem Generator (14) verbunden sind.

11. Verfahren nach einem der vorangehenden Ansprüche, **dadurch gekennzeichnet, dass** das Umschalten phasenkonstant erfolgt.

12. Verfahren nach Anspruch 11, **dadurch gekennzeichnet, dass** das Umschalten synchronisiert an einem Maximum erfolgt.

13. Windenergieanlage mit einem von einem Windrotor (12) angetriebenen Generator (14), der mit einem Umrichter (3) zusammenwirkt zur Erzeugung elektrischer Leistung, welche mit Netzfrequenz über eine Anschlussleitung (17) abgegeben wird, wobei der Umrichter (3) zumindest einen netzseitigen Wechselrichter (32) mit Stromventilen (36, 36') umfasst, und eine Umrichtersteuerung (2) vorgesehen ist zur Ansteuerung des Umrichters (3), wobei die Stromventile (36, 36')von einem Steuersignal mit einer Schaltfrequenz angesteuert sind,
**dadurch gekennzeichnet, dass**
die Schaltfrequenz sprungweise zwischen einem ersten und mindestens einem zweiten ganzzahligen Vielfachen der Vielfaches der Netzfrequenz veränderlich ist, und eine Umschalteinheit (7) vorgesehen ist, welche die Schaltfrequenz zyklisch umschaltet, wobei ein Frequenzabstand zwischen den Schaltfrequenzen mindestens das Doppelte der Netzfrequenz beträgt und keine der Schaltfrequenzen ein ganzzahliges Vielfaches einer anderen der Schaltfrequenzen ist.

14. Windenergieanlage nach Anspruch 13, **dadurch gekennzeichnet, dass** die Umschalteinheit (7) zur Ausführung des Verfahrens nach einem der Ansprüche 2 bis 8 ausgebildet ist.

15. Windenergieanlage nach Anspruch 13 oder 14, **dadurch gekennzeichnet, dass** eine Synchronisationseinrichtung (8) vorgesehen ist.
